# EUROPÄISCHE PATENTSCHRIFT

(11) **EP 2 042 277 B1**
(45) Veröffentlichungstag und Bekanntmachung des Hinweises auf die Patenterteilung: **08.12.2010**
(21) Anmeldenummer: 08016615.0
(22) Anmeldetag: 22.09.2008
(51) Int. Cl.: B25J 15/00

(54) **Flexibles Greifwerkzeug**
Flexible gripping tool
Outil de saisie flexible

(30) Priorität: 28.09.2007 DE 202007013673 U
(43) Veröffentlichungstag der Anmeldung: 01.04.2009
(73) Patentinhaber: KUKA Systems GmbH, 86165 Augsburg (DE)
(72) Erfinder: Jakob, Marius, 86179 Augsburg (DE); Vogt, Werner, 86169 Augsburg (DE)
(74) Vertreter: Ernicke, Klaus Stefan

(56) Entgegenhaltungen:
- EP-A- 1 396 313
- WO-A-2006/089327
- DE-A1-102005 062 706
- US-B1- 6 345 818

## Beschreibung

Die Erfindung betrifft ein Greifwerkzeug für ein oder mehrere Werkstücke.

Aus der Praxis sind robotergeführte Greifwerkzeuge in verschiedenen Ausführungsformen bekannt. Sie besitzen ein starres Gestell, welches über einen Anschluss mit der Hand eines Roboters oder anderen Manipulators verbunden werden kann. Am Gestell sind mehrere Greifer befestigt. Die vorbekannten Greifwerkzeuge sind durch ihre starre Gestaltung auf bestimmte Werkstücke adaptiert.

Aus der US 6,345,818 B1 ist ein Greifwerkzeug mit einem starren Greifergestell bekannt, das aus mehreren untereinander fest verbundenen Stangen mit daran ebenfalls fest angeordneten Saugern besteht. Das Greifergestell weist eine Trenneinrichtung für das oberste Blech auf, wobei an einer Gestellecke ein einzelner Sauger an einem Schwenkarm angeordnet ist und mitsamt dem angesaugten Eckbereich eines Blechs ein kleines Stück hochgeschwenkt werden kann. Hierdurch wird ein kleiner Einblasschlitz an der Blechecke gebildet, in den Druckluft eingeblasen werden kann. Das oberste Blech wird unter Beibehaltung seiner Planlage mit dem starren Greifergestell vom Stapel abgehoben, wobei die eingeblasene Druckluft für die Blechtrennung sorgt.

Die DE 10 2005 062 706 A1 lehrt eine Vorrichtung zum direkt-kraftschlüssigen Greifen von geometrievarianten Gegenständen mit Robotern und Handhabungseinrichtungen. Das Gestell besteht aus einer einteiligen starren Basisplatte, an dem Zylinderantriebe mit Saugern an den Kolbenstangenenden beweglich angeordnet sind. Durch die Antriebsverstellung und die Ausfahrbewegung der Zylinder sind die Sauger in ihrer Raumlage verstellbar und lassen sich an eine gewölbte Werkstückgeometrie anpassen.

Die WO 2006/089327 A1 befasst sich mit einer Greifvorrichtung, die eine starre Anschlussplatte mit an den Plattenecken schwenkbar angeordneten Tragarmen zeigt. Die Tragarme sind in ihrer Schwenklage mittels einer Anschlag- und Feststellvorrichtung fixiert. An den Enden der Tragarme sind Sauger angeordnet. Die Tragarme können in ihrer Längsrichtung linear verstellbar sein.

Aus der EP 1 396 313 A1 ist ein starres Greifergestell mit mehreren Saugern bekannt, die linear in der Höhe und z.T. auch seitlich linear verstellbar sind und deren Saugkappen gelenkig am Ende einer vertikalen Vorschubeinheit angeordnet sind.

Es ist Aufgabe der vorliegenden Erfindung, ein besseres Greifwerkzeug mit erweitertem Einsatzbereich und Zusatzfunktionen aufzuzeigen.

Die Erfindung löst diese Aufgabe mit einem Greifwerkzeug gemäß Anspruch 1 und einem Verfahren gemäß Anspruch 15.

Das mehrgliedrige Gestell hat den Vorteil, dass es sich an unterschiedliche Werkstückgeometrien anpassen kann. Dies ist insbesondere günstig, wenn die Werkstücke zu Formänderungen neigen oder in Stapelform vorliegen. Innerhalb eines Stapels können Werkstücke durch gegenseitiges Verschieben, eine schräge oder windschiefe Stapelform oder dergl. sich durch äußere Einflüsse verformen. Außerdem ist das beanspruchte Greifwerkzeug auch für die Handhabung unterschiedlicher Werkstücke geeignet. Durch die bevorzugt steuerbare Stelleinrichtung kann das mehrgliedrige Gestell in die jeweils gewünschte oder benötigte Form gebracht werden.

Das verstellbare Greifwerkzeug kann außerdem Zusatzfunktionen bei der Handhabung der Werkstücke erfüllen. Einerseits kann die Formgebung des Werkstücks durch eine Verstellung des Gestells geändert werden, wobei ein anfangs gewölbtes Werkstück z.B. gestreckt werden kann. Auch eine umgekehrte Verformung ist möglich. Ferner kann durch eine Veränderung der Gestellgeometrie unter Mitnahme des gegriffenen Werkstücks eine Vereinzelung oder ein Abschäleffekt stattfinden. Dies erleichtert das Greifen von Werkstücken aus einem Stapel.

Die mit den beweglichen Gestellgliedern verbundenen Greifer können den Formänderungen des mehrgliedrigen Gestells folgen und sich ebenfalls an die geänderte Geometrie anpassen. Hierfür können insbesondere die Greifer ein oder mehrere Bewegungsachsen aufweisen. Dies bietet eine zusätzliche Anpassungsmöglichkeit des Greifwerkzeugs an die Werkstück- oder Stapelgeometrie.

Das beanspruchte Greifwerkzeug kann für unterschiedlichste Zwecke und Werkstücke eingesetzt werden. Durch seine Flexibilität bietet es eine hohe Betriebs- und Funktionssicherheit. Außerdem lassen sich die Anpassungen sehr schnell durchführen, was der Taktzeit und der Wirtschaftlichkeit des flexiblen Greifwerkzeugs im industriellen Einsatz zugute kommt.

Die Greifer können in beliebig geeigneter Weise ausgebildet und angeordnet sein. Besonders günstig ist eine Anordnung an den Verbindungsstellen der Gestellglieder. Hierdurch können die Greifer den Geometrieänderungen des Gestells und insbesondere einer hierdurch gebildeten Rundung folgen. Rückstellelemente halten hierbei die Greifer in einer Mittellage bzw. auf einer Winkelhalbierenden gegenüber den benachbarten Gestellgliedern und sorgen im Entlastungsfall für die Rückstellung in eine Ausgangsposition. Hierbei ist es günstig, wenn die Greifer gleichachsig mit den benachbarten Gestellgliedern schwenkbar gelagert sind. Über ein oder mehrere weitere rotatorische und/oder translatorische Achsen können Anpassungen der Greifer an die Werkstück- und Stapelgeometrie sicher gestellt werden. Weitere Rückstellelemente, die z.B. allesamt als Gasfedern ausgebildet sein können, sorgen für definierte Ausgangslagen in einer Ruhe- und Entlastungsstellung. Eine kardanische Lagerung der Greifer ist besonders günstig. Eine Schiebelagerung erlaubt ein Nachführen der Greifer bei Biegungen und Streckungen der Werkstücke und des mehrgliedrigen Gestells.

Die Stelleinrichtung kann in beliebig geeigneter Weise ausgebildet sein. Sie kann insbesondere z.B. einen fernsteuerbaren Stellantrieb mit ein oder mehreren Stellelementen aufweisen. Der beanspruchte Kurbeltrieb hat den Vorteil, dass mit einem Antrieb mehrere Gestellglieder betätigt werden können. Durch Wahl einer geeigneten Kurbelgeometrie können die gegenseitigen Verstellungen und Winkellagen der Gestellglieder in der gewünschten Weise beeinflusst und eingestellt werden. Insbesondere lassen sich durch einen symmetrischen Kurbeltrieb gleichmäßige Gliederbewegungen erreichen, wobei das Gestell mit den Greifern z.B. eine kreisrunde Kontur oder eine von der Kreisform in beliebiger weise abweichende gebogene Kontur einnehmen kann. Durch Variation der Zahl der Gestellglieder können kleinere oder größere Greifwerkzeuge mit entsprechend veränderlichen Verstellmöglichkeiten geschaffen werden.

Das flexible Greifwerkzeug kann zusammen mit einem Manipulator eine Handhabungseinrichtung bilden, die für beliebige Zwecke und in beliebigen Branchen eingesetzt werden kann. Ein vorteilhafter Anwendungsbereich liegt bei Stapeleinrichtungen, mit denen Werkstückstapel auf- und abgebaut werden können, wobei auf die je nach Stapelhöhe, Werkstückgeometrie oder aus anderen Gründen veränderliche Stapelform Rücksicht genommen werden kann. Auch eventuelle Formänderungen durch Zwischenlagen, Werkstückverzüge oder aus anderen Gründen können ohne Beeinträchtigung der Staplerfunktion kompensiert werden. Weitere Anwendungsbereiche liegen beim Handling geschüsselter oder anderer Werkstücke mit runden oder anderen Formgebungen. Im Fahrzeugbau liegt ebenfalls eine vorteilhafte Einsatzmöglichkeit, z.B. beim Zuführen und lagegenauen Anpressen von Karosserieteilen, z.B. Dachblechen, an andere gewölbte oder in sonstiger Weise linear oder nicht linear geformte andere Fahrzeugteile, z.B. Seitenwände. Das flexible Greifwerkzeug kann sich mit dem gehaltenen Karosseriebauteil an die ggf. toleranzbehaftete oder aus anderen Gründen veränderliche Form der anderen Fahrzeugteile anpassen und für eine gleichmäßige Anpressung und Anlage des mitgeführten Werkstücks sorgen.

Das flexible Greifwerkzeug kann mit ein oder mehreren mitgeführten oder externen Messeinrichtungen kombiniert werden, um Werkstückeigenschaften, z.B. die aktuelle Formgebung der Werkstücke, ihre Oberflächenbeschaffenheit, die Feuchtigkeit von Holzwerkstücken oder dergl. zu erfassen und für die Steuerung des Greifwerkzeugs und der Handhabungseinrichtung heranzuziehen. Hierbei können z.B. durch ein mit räumlichem Übermaß ausgebildetes Greifwerkzeug Werkstücke in Fehllagen gegriffen werden, wobei auch die Fehlposition nach ein oder mehreren Achsen erfasst wird. Bei der Abgabe des Werkstücks kann durch eine entsprechende Bewegungskorrektur des Manipulators die Fehllage wieder ausgeglichen und das Werkstück in der korrekten Soll-Lage abgegeben werden. Diese Lagekorrekturen können sehr schnell und während des Handlingbetriebs durchgeführt werden. Die Handhabungseinrichtung hat dadurch eine sehr hohe Greif- und Positionsgenauigkeit und eine große Handlingkapazität.

Ein oder mehrere Handhabungseinrichtungen können in einer Handhabungsstation angeordnet sein und in abgestimmter Weise zusammenwirken. Ein bevorzugter Einsatzbereich ist das Umstapeln von Werkstücken unter Bildung von Zwischenstapeln aus verschiedenen Werkstücken oder Werkstücken und Einlagen. Ein solcher Zwischenstapel kann umgekehrt wieder entstapelt und zurücksortiert werden, wobei ein sortenreiner Ablagestapel von Werkstücken gebildet werden kann.

Das Greifwerkzeug kann mehrere Werkstücke gleichzeitig oder nacheinander aufnehmen und wieder ablegen, wobei die Aufnahme- und Ablagereihenfolge beliebig geändert werden kann. Dies ermöglicht ein Sortieren von Werkstücken und erlaubt die Bildung und Änderung beliebiger Stapelformen. Werkstücke können auch ohne Stapel aufgenommen, transportiert, evtl. in ihrer Lage und Ausrichtung geändert und gleich wieder abgelegt werden. Die Handhabungsprozesse sind beliebig wählbar.

Ein besonders geeigneter Einsatzzweck liegt beim Handling von Holzteilen, z.B. Brettern oder Paneelen, die in feuchtem Zustand auf einem Vorlagestapel zugeführt und für eine anschließende Trocknung in einen Mischstapel unter Einlage von Trockenblechen umgestapelt werden sollen. Nach der Trocknung kann der Mischstapel wieder umsortiert werden, wobei die getrockneten Holzteile zu einem Ablagestapel aufgeschichtet werden und die Trockenbleche zwischengepuffert oder direkt zur Bildung eines neuen Zwischenstapels mit feuchten Holzteilen wiederverwendet werden.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine Handlingeinrichtung mit einem flexiblen Greifwerkzeug und einem Werkstückstapel in Seitenansicht,
- Figur 2:: das Greifwerkzeug von Figur 1 in einer vergrößerten und schematisierten Ansicht,
- Figur 3 bis 7:: ein Greifwerkzeug und dessen Teile mit mehreren Bewegungsachsen in verschiedenen geklappten Ansichten und Winkelstellungen,
- Figur 8 und 9:: ein flexibles Greifwerkzeug in stärkerer Detailierung und in verschiedenen perspektivischen Ansichten,
- Figur 10:: eine perspektivische Ansicht einer Gelenkeinheit des Greifwerkzeugs,
- Figur 11 bis 15:: ein Greifwerkzeug beim Handling geschüsselter Werkstücke in verschiedenen Funktions- und Bewegungsabschnitten,
- Figur 16 bis 20:: ein Greifwerkzeug beim Greifen und Abschälen von Werkstücken in verschiedenen Funktions- und Bewegungsschritten,
- Figur 21:: ein Greifwerkzeug in anderer Ausrichtung,
- Figur 22:: ein Greifwerkzeug mit einer Messeinrichtung,
- Figur 23:: eine Variante einer stationären Messeinrichtung,
- Figur 24 bis 27:: verschiedene Varianten in Aufbau und Kinematik des Greifwerkzeugs und
- Figur 28 und 29:: eine Handlingstation mit mehreren Handlingeinrichtungen und Greifwerkzeugen in Draufsicht und perspektivischer Ansicht.

Die Erfindung betrifft eine Greifeinrichtung (1), die zur werkzeugartigen Handhabung mittels einer Handhabungseinrichtung (2) geeignet und vorgesehen ist und die nachfolgend als Greifwerkzeug bezeichnet wird. Die Erfindung betrifft ferner eine mit dem Greifwerkzeug (1) ausgerüstete Handhabungseinrichtung (2) und auch eine mit ein oder mehreren Handhabungseinrichtungen (2) ausgestattete Handhabungsstation (7). Die Erfindung befasst sich außerdem mit einem Verfahren zum Handhaben von Werkstücken (8).

Das Greifwerkzeug (1) dient zum Greifen und Handhaben von ein oder mehreren Werkstücken (8), die beliebig ausgebildet sein können. In den gezeigten Ausführungsformen sind im wesentlichen ebene und relativ dünne Werkstücke in Plattenform dargestellt. Dies können z.B. Bretter, Paneele, Platten oder dergl. aus Holz, Metall, Kunststoff oder sonstigen Materialien sein. Abweichend von den gezeigten Ausführungsbeispielen können die Werkstücke (8) auch eine andere Formgebung haben und z.B. als ein- oder mehrfach gewölbte Teile, z.B. Rohre, Wannen oder dergl. ausgebildet sein. Ferner können die Werkstücke (8) beliebige andere Formen, z.B. abgestufte oder zerklüftete Formen oder dergl. haben.

Das Greifwerkzeug (1) ist flexibel und verstellbar und kann seine Geometrie steuerbar ändern. Es besteht in den verschiedenen Ausführungsformen jeweils aus einem mehrgliedrigen Gestell (13), dessen Gestellglieder (15,16,17) gelenkig miteinander verbunden sind. Das Greifwerkzeug (1) weist ferner mindestens eine steuerbare Stelleinrichtung (24) für die gegenseitige Verstellung von mehr als zwei Gestellgliedern (15,16,17) auf.

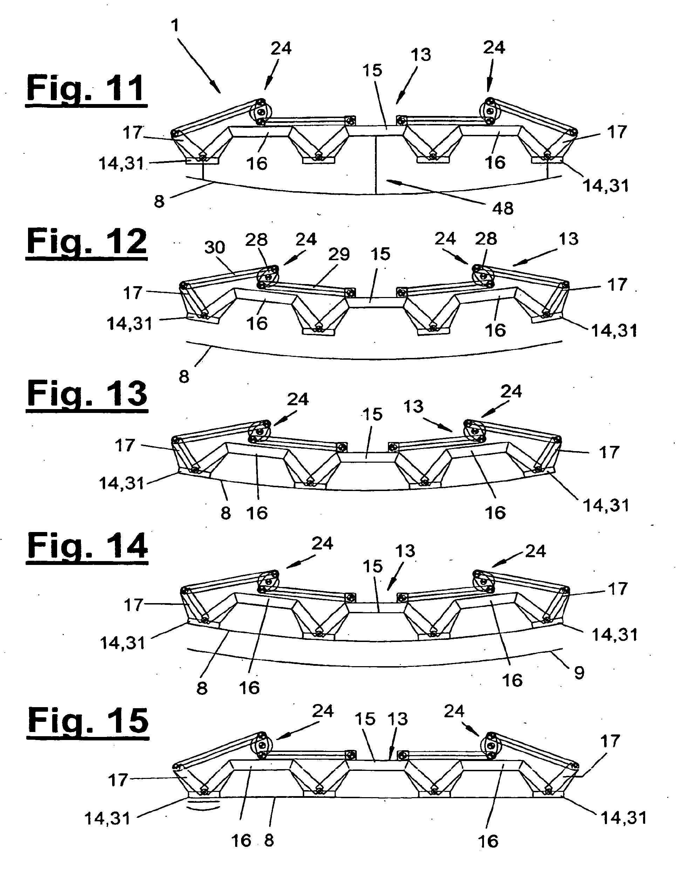

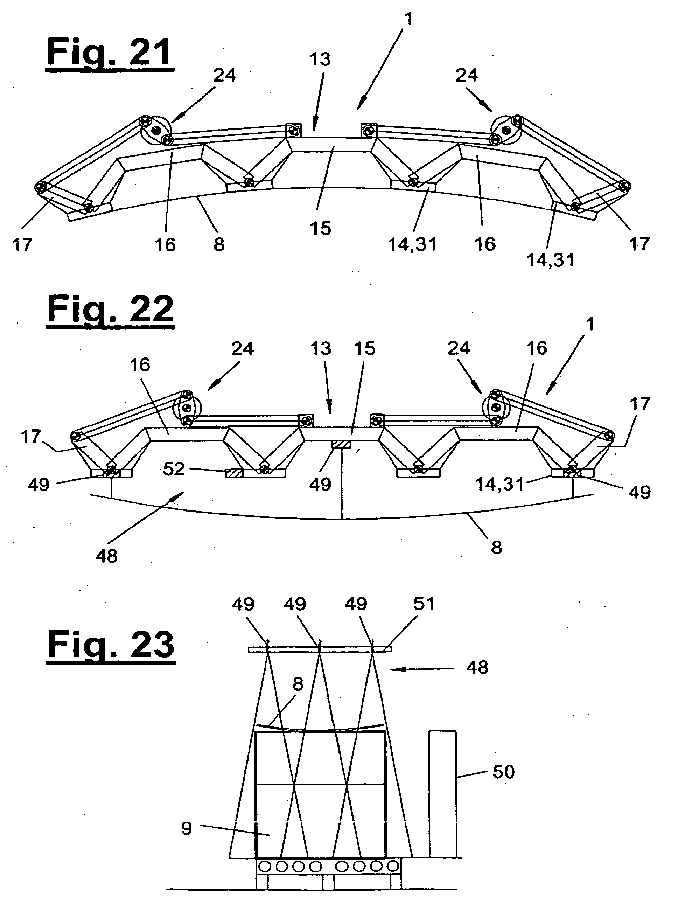

In den gezeigten Ausführungsformen sind die Gestellglieder (15,16,17) in einer Reihe hintereinander angeordnet und an den Verbindungsstellen (21) durch Lager (22), vorzugsweise Schwenklager, miteinander verbunden. Unter Einfluss der Stelleinrichtung (24) können sich die Gestellglieder (15,16,17) gegeneinander verdrehen und im Verlauf der Gliederkette eine beliebige Form annehmen. Dies kann z.B. die in Figur 12 bis 14 und 18 bis 19 gezeigte konkave Wannenform sein. Alternativ ist die in Figur 21 dargestellte konvexe Bogenform möglich. Derartige Krümmungen oder Bogenverläufe in der Gestellform können auch nur teilweise vorhanden sein, wobei in den anderen Bereichen eine gerade Formgebung oder eine gegenläufig gekrümmte Formgebung vorhanden ist. Je nach Länge des Gestells (13) und Zahl der Gestellglieder (15,16,17) sind auch Wellenformen oder dergl. möglich.

In Abwandlung der gezeigten Ausführungsform kann das Gestell (13) auch mehrere Reihen von Gestellgliedern (15,16,17) nebeneinander aufweisen. Die Gestellglieder (15,16,17) können hierbei auch quer miteinander verbunden sein und rasterförmig angeordnet sein.

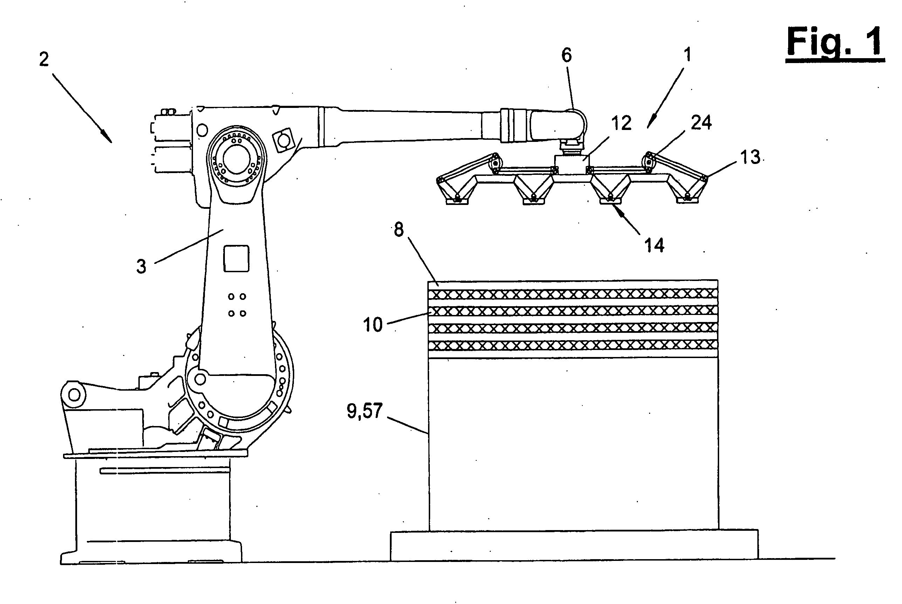

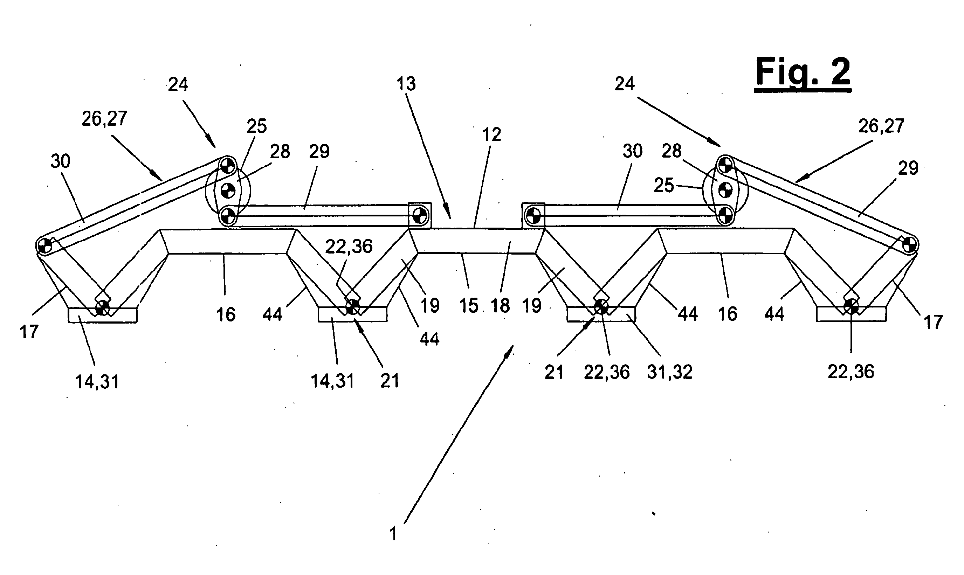

Die Zahl der Gestellglieder (15,16,17) kann beliebig groß sein und beträgt mindestens zwei. Die Gliederzahl kann gerade oder ungerade sein. Im Ausführungsbeispiel von Figur 1 bis 3 sind z.B. fünf Gestellglieder (15,16,17) vorhanden. Bei einer ungeraden Gliederzahl gibt es ein zentrales Gestellglied (15) und daran beidseits anschließende seitliche Gestellglieder (16). An den Gestellenden sind jeweils zwei endseitige Gestellglieder (17) vorhanden. Die Gestellglieder (15,16,17) können eine gleiche oder unterschiedliche Formgebung haben. Ferner kann ihre Formcharakteristik ähnlich sein und sich z.B. in der Gliederlänge unterscheiden. In den gezeigten Ausführungsbeispielen sind die Zentralglieder (15) und die Zwischenglieder (16) im wesentlichen gleichartig ausgebildet, wobei die Endglieder (17) eine abweichende und verkürzte Formgebung aufweisen.

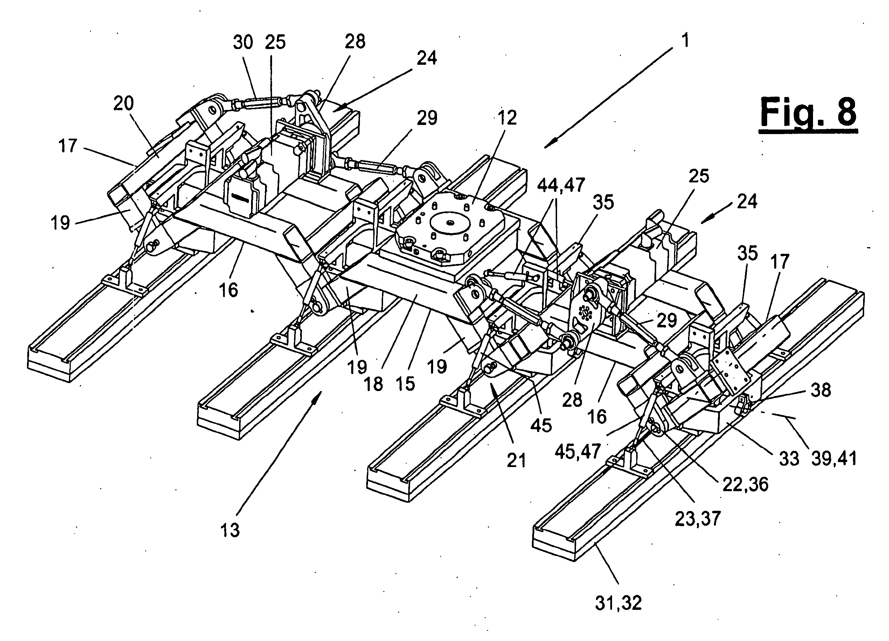

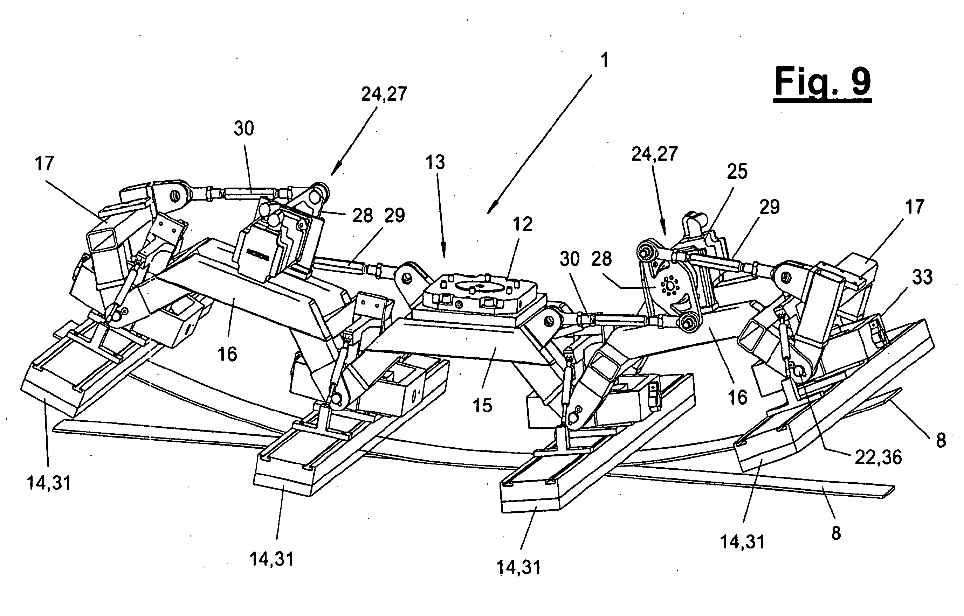

Die Gestellglieder (15,16,17) können beispielsweise brückenartig oder bügelförmig ausgebildet sein. Figur 8 und 9 zeigen hierzu konstruktive Gestaltungsmöglichkeiten. Die Zentral- und Zwischenglieder (15,16) bestehen dabei jeweils aus einem in Gestelllängsachse sich erstreckenden Mittelteil (18), an dem endseitig jeweils zwei schräg nach außen ragende Seitenteile (19) angeschlossen sind. An deren Enden befinden sich die Verbindungsstellen (21) und die besagten Schwenklager (22). Die Mittelteile (18) können z.B. aus einer Platte oder wie in den gezeigten Ausführungsbeispielen aus zwei oder mehr parallelen Armen bestehen, die untereinander durch Stege querverbunden sind. Die Seitenteile (19) können gabelförmig und mehrarmig, z.B. zweiarmig, ausgebildet sein.

Die Endglieder (17) können jeweils ein Seitenteil (19) aufweisen, welches zwei oder mehr Lagerarme besitzen kann, die durch ein Stegteil (20) zu einer Bügelform miteinander verbunden sind. Das Stegteil (20) kann außerdem einen längsgerichteten Fortsatz aufweisen, der ähnlich wie die Mittelteile (18) der anderen Gestellglieder (15,16) ausgebildet sein kann. Abweichend von den gezeigten Ausführungsbeispielen können die Gestellglieder (15,16,17) eine beliebige andere geeignete Formgebung haben.

Das Gestell (13) weist an geeigneter Stelle mindestens einen Anschluss (12) zur Verbindung mit einem Manipulator (3,4,5) auf. Der Anschluss (12) kann z.B. eine Flanschplatte zur festen oder lösbaren Verbindung mit dem Abtriebsflansch einer Manipulatorhand (6) sein. Der Anschluss (12) kann außerdem als Bestandteil einer Wechselkupplung ausgebildet sein. Der Anschluss (12) ist in den gezeigten Ausführungsbeispielen bevorzugt mittig am Gestell (13) und insbesondere am Mittelteil (18) von dessen Zentralglied (15) angeordnet. Durch die Stelleinrichtung (24) kann das mehrgliedrige Gestell (13) in der gewünschten Formgebung fixiert werden, wodurch es eine starre Einheit bildet. Der Anschluss (12) kann alternativ außermittig und z.B. an einem Zwischenglied (16) angeordnet sein. Es ist auch eine Mehrfachanordnung von Anschlüssen (12) möglich.

Die Stelleinrichtung (24) kann einfach oder mehrfach vorhanden sein. Sie kann konstruktiv in beliebig geeigneter Weise ausgebildet sein und ist bevorzugt steuerbar. Sie besteht jeweils aus einem Stellantrieb (25) mit ein oder mehreren Stellelementen (26). Die ein oder mehreren Stelleinrichtungen (24) sind bevorzugt an einem Gestellglied (15,16,17) und insbesondere an dessen Mittelteil (18) außenseitig angeordnet. Über die besagten Stellelemente (26) wird eine Verbindung mit ein oder mehreren benachbarten Gestellgliedern (15,16,17) hergestellt. Durch Betätigung der Stellelemente (26) wird das jeweils benachbarte Gestellglied (15,16,17) um das Lager (22) an der Verbindungsstelle (21) bewegt, vorzugsweise geschwenkt. In Abweichung der gezeigten und beschriebenen Ausführungsformen kann alternativ oder zusätzlich eine translatorische Bewegung stattfinden. Ferner ist eine mehrachsige Bewegung mittels Kurvenbahnen oder dergl. möglich.

In der gezeigten Ausführungsform weist die Stelleinrichtung (24) einen Kurbeltrieb (27) auf. Der Kurbeltrieb (27) besitzt eine um eine Zentralachse drehbar gelagerte und mit dem Stellantrieb (25) verbundene Kurbelscheibe (28), an der an geeigneter Stelle ein oder mehrere Kurbelarme (29,30) angeschlossen sind. In der Ausführungsform von Figur 8 und 9 sind zwei entgegengesetzt gerichtete Kurbelarme (29,30) an zwei zur Scheibendrehachse diametral gegenüberliegenden Anschlusspunkten gelenkig mit der Kurbelscheibe (28) verbunden. Die Enden der Kurbelarme (29,30) sind in geeigneter Weise mit dem benachbarten Gestellglied (15,16,17) verbunden, z.B. über Lagerböcke mit Schwenklagern. In der Variante von Figur 8 und 9 sind zwei solcher Stellantriebe (24) mit Kurbeltrieben (27) an den Zwischengliedern (16) angeordnet und jeweils mit dem Zentralglied (15) und den beiden außenseitigen Endgliedern (17) verbunden.

Der Stellantrieb (25) kann in beliebig geeigneter Weise ausgebildet sein, z.B. als Elektromotor mit einem Untersetzungsgetriebe. Der Stellantrieb (25) ist steuerbar und kann eine Positionssteuerung aufweisen, mittels der die Kurbelscheibe (28) in die gewünschte Drehstellung gebracht wird. Durch die symmetrische Kurbelscheibenausbildung werden die angeschlossenen Kurbelarme (29,30) in entgegengesetzten Richtungen und um gleiche Drehwinkel bewegt. Wenn auch die Kurbelarme (29,30) gleiche Längen haben, werden sie durch die Symmetrieanordnung um gleiche Wege bewegt. Bei symmetrischer Anordnung schwenken die benachbarten Gestellglieder (15,16,17) ebenfalls um gleiche Winkel. Hierdurch kann eine gleichmäßige runde und z.B. kreisbogenförmige Gestellform erreicht werden. Bei der Ausführungsform von Figur 1 bis 9 schwenken z.B. die Zwischenglieder (16) gegen das am Anschluss (12) gehaltene Zentralglied (15) und schwenken ihrerseits die Endglieder (17).

In der gezeigten Ausführungsform des Kurbeltriebs (27) bilden die Kurbelarme (29,30) die Stellelemente (26). In Abwandlung hierzu kann die Stelleinrichtung (24) von pneumatischen oder hydraulischen Zylindern, von motorisch angetriebenen Spindeln oder dergl. in Verbindung mit geeigneten gelenkigen Lagerungen gebildet werden.

Ferner ist es möglich, dass die Stelleinrichtung(en) (24) Fixiermittel für ein oder mehrere vorgegebene oder frei bestimmbare Positionen aufweist. Dies können beispielsweise Anschläge für Endstellungen, Rasten für Zwischenstellungen oder dergl. sein. Ferner können Klemmeinrichtungen, z.B. Bremsen oder dergl. zur Fixierung der eingenommenen Bewegungsposition vorhanden sein. Für eine geeignete Positionssteuerung sind außerdem Wege- oder Winkelmesssysteme oder andere geeignete Messeinrichtungen vorhanden.

An den Gestellgliedern (15,16,17) sind ein oder mehrere Greifer (14) angeordnet, die zur lösbaren Aufnahme von ein oder mehreren Werkstücken (8) ausgebildet und angeordnet sind. Die Greifer (14) befinden sich in den gezeigten Ausführungsformen im Bereich der Verbindungsstellen (21) zwischen den Gestellgliedern (15,16,17). Sie können zusätzlich oder alternativ an anderen Stellen und in anderer Zahl an den Gestellgliedern (15,16,17) angeordnet sein.

Der einzelne Greifer hat bevorzugt ein oder mehrere Bewegungsachsen und kann seine Lage gegenüber den ein oder mehreren benachbarten Gestellgliedern (15,16,17) ändern. Der Greifer (14) hat hier z.B. eine rotatorische Bewegungsachse oder Lagerachse (37). Er kann zusätzlich oder alternativ eine translatorische Bewegungsachse (41) aufweisen. Er kann ferner ein oder mehrere zusätzliche rotatorische und/oder translatorische Bewegungsachsen (39) besitzen. Durch die mehrachsige Lagerung kann der Greifer (14) sich nach dem oder den Werkstück(en) (8) ausrichten, wobei ein oder mehrere Rückstellelemente (44,45,46) im Achsenbereich wirksam sind und für eine Lagestabilisierung, insbesondere für eine Rückführung in eine vorgegebene Ausgangsstellung in Entlastungs- oder Ruheposition des Greifers (14) sorgen können.

Der Greifer (14) ist bevorzugt schwenkbar an zumindest einem Gestellglied (15,16,17) gelagert. Sein Schwenklager (36) und seine Lagerachse (37) fluchten mit dem Schwenklager (22) und der Lagerachse (36) der benachbarten Gestellglieder (15,16,17). Diese Lagerachsen (23,37) sind quer zur Längsrichtung des Gestells (13) ausgerichtet und erstrecken sich längs der bevorzugt länglich ausgebildeten Greifer (14).

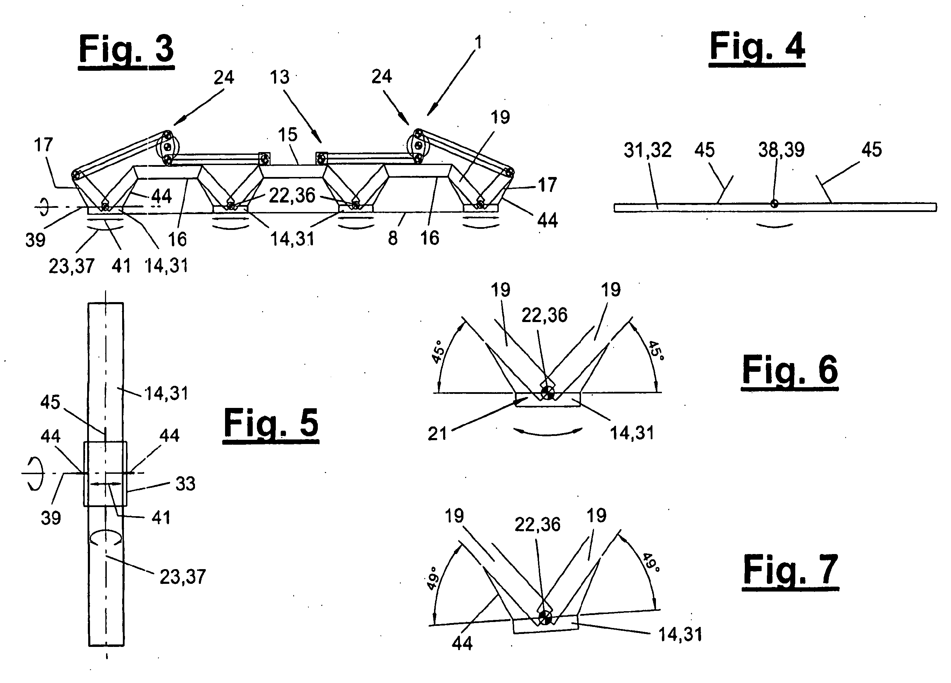

Figur 3 zeigt in der linken Bildhälfte eine beispielsweise Kinematik eines Greifers (14). Dieser hat außer der längsgerichteten Lagerachse (37) noch eine quer dazu ausgerichtete schwenkbare Lagerachse (39) und eine ebenfalls quer ausgerichtete Schiebeachse (41). Alle Greifer (14) können die gleiche Kinematik aufweisen. Die rotatorischen Bewegungsachsen (37,39) können Bestandteil einer kardanischen Lagerung sein.

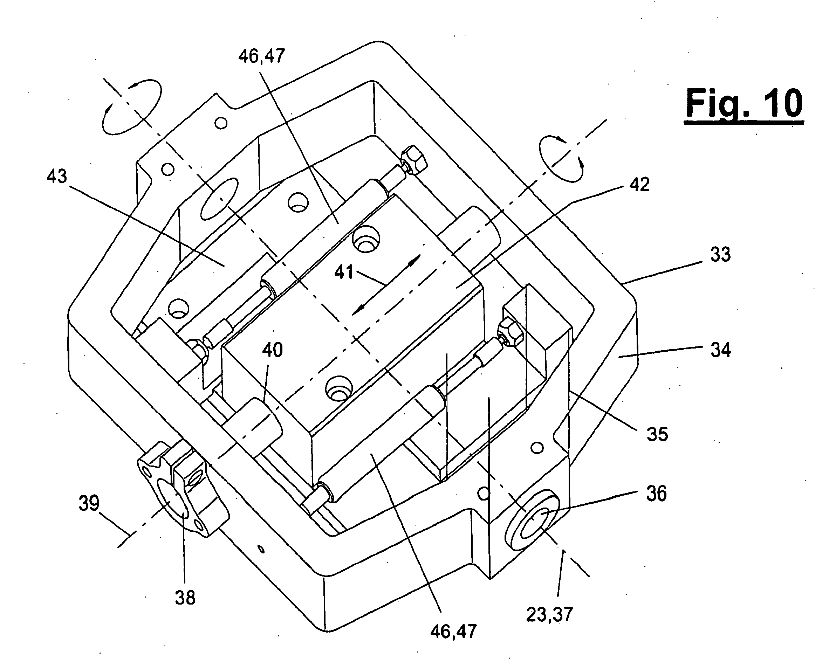

Wie Figur 8 bis 10 verdeutlichen, kann der Greifer (14) eine Gelenkeinheit (33) zur Bildung der mehrachsigen Lagerung aufweisen. Diese wird in Figur 10 näher verdeutlicht und besteht aus einem Gehäuse (34), welches z.B. eine geschlossene Ring- oder Rahmenform aufweisen kann und die Lagerstellen (36,38) für die sich rechtwinklig kreuzenden rotatorischen Lagerachsen (37,39) aufweist. Das Gehäuse (34) kann ferner einen hochstehenden Bügel (35) aufweisen, der in Figur 8 erkennbar ist und der zum Anschluss von ein oder mehreren Rückstellelementen (44) dienen kann.

Im Gehäuseinnenraum ist ein Lagerblock (42) angeordnet, der mittels eines Schiebelagers (40) auf der Lagerwelle des Schwenklagers (38) längs und in Richtung (41) verschiebbar ist. Beidseits des Lagerblocks (42) können gegeneinander gerichtete Rückstellelemente (46) angeordnet sein, die federnde Eigenschaften haben und z.B. als Gasfedern (47) ausgebildet sind. Sie zentrieren den Lagerblock (42) auf der Achse (39,41) bei entlastetem Greifer (14).

An der Unterseite des Lagerblocks (42) ist ein Anschlussflansch (43) angeordnet, an dem sich ein Greifelement (31) befindet. Durch die Lager (36,38,40) sind der Anschlussflansch (43) und das Greifelement (31) mehrachsig beweglich und insbesondere kardanisch und verschiebbar gegenüber dem benachbarten Gestellgliedern (15,16,17) gelagert.

Figur 3 bis 5 zeigen schematisch eine Anordnung der Rückstellelemente (44,45,46), die z.B. allesamt als Federn, insbesondere als Gasfedern (47), ausgebildet sind. Die Rückstellelemente (44) greifen in diesem Fall am Greifer (14), insbesondere an der Gelenkeinheit (33), z.B. am Gehäuse (34) oder am Bügel (35), beidseits an und sind mit dem jeweils benachbarten Gestellglied (15,16,17) verbunden. Hierbei kann eine symmetrische Anordnung und Auslegung vorhanden sein, die auf die Drehung des Greifers (14) um die fluchtenden Schwenkachsen (23,37) einwirkt und die gemäß Figur 6 und 7 den Greifer (14) jeweils mittig gegenüber den benachbarten Gestellgliedern (15,16,17) und deren Seitenteilen (19) ausrichtet. Die auf der vorzugsweise ebenen Greiffläche des Greifers (14) bzw. des Greifelements (31) aufstehende Normale verläuft auf der Winkelhalbierenden zwischen den Seitenteilen (19). Durch diese Anordnung erstrecken sich bei einem bogenförmig gekrümmten Gestell (13) die Greifer (14) ebenfalls entlang der gebogenen Hüllkurve.

Am Greifelement (31) sind beidseits des querliegenden Schwenklagers (38) Rückstellelemente (45) angeschlossen und mit der Gelenkeinheit (33) gemäß Figur 5 verbunden. Sie bewirken die Einnahme einer definierten Ausgangsstellung des Greifelements (31) um die querliegende Lagerachse (39) bei entlastetem Greifer (14).

Die Greifelemente (31) fassen ein oder mehrere Werkstücke (8) punkt- oder flächenförmig und können in beliebig geeigneter Weise ausgebildet sein. Im gezeigten Ausführungsbeispiel handelt es sich um längliche Flächengreifer, die mit einer Saugleiste ausgestattet sind. Die deformierbare Saugleiste kann drucksensibel sein und nur bei Kontakt mit einem Werkstückbereich und einer entsprechenden Verformung ihres Schaumstoffkissens lokal einen Saugdruck aufbauen. Ein solcher Saug- oder Flächengreifer kann z.B. gemäß der DE 102 16 221 C1 ausgebildet sein. Er ermöglicht ein selektives oder gemeinsames Greifen mehrerer ggf. mit Abstand nebeneinander liegender Werkstücke (8). In einer abgewandelten Ausführungsform kann das Greifelement (31) aus ein oder mehreren Magneten bestehen. An den Endgliedern (17) können nicht dargestellte Zusatzgreifer vorhanden sein, die als schwenkbare Haken ausgebildet sind und das gehaltene Werkstück (8) endseitig untergreifen und ggf. zentrieren können. Das Greifelement (31) kann aus mehreren Segmenten bestehen. Es kann insgesamt oder segmentweise steuerbar sein.

Figur 11 bis 15 zeigen einen Anwendungsfall des Greifwerkzeugs (1) beim Handhaben gebogener oder geschüsselter Werkstücke (8), die z.B. die gezeigte wannenförmige oder konkave gleichmäßige Kreisbogenform haben. Gemäß Figur 1 ist das Gestell (13) zunächst in Strecklage ausgerichtet. Durch eine geeignete mitgeführte oder externe Messeinrichtung (48) kann die tatsächlich vorhandene Werkstückform ermittelt werden, indem z.B. zentral und an den Enden des Gestells (13) der lokale Abstand zum Werkstück (8) gemessen wird. Aus den Abständen gegenüber einer Referenzlage kann die Werkstückkontur oder -bogenform ermittelt werden. Anschließend wird gemäß Figur 12 durch Betätigung der Stelleinrichtungen (24) das Gestell (13) in eine entsprechende Bogenform gebracht, wobei die Greifer (14) noch vom Werkstück (8) distanziert sind. Anschließend wird gemäß Figur 13 das Greifwerkzeug (1) an das Werkstück (8) zugestellt und nimmt dieses mit den entsprechend ausgerichteten Greifern (14) auf. Durch Anheben des Greifwerkzeugs (1) wird das lagegenau aufgenommene Werkstück (8) vom Untergrund gelöst. Dies kann z.B. ein Stapel (9) aus mehreren Werkstücken (8) sein. Figur 14 verdeutlicht diese Stellung. Das Werkstück (8) kann dann zur gewünschten Ablegestelle transportiert und abgegeben werden. Figur 15 zeigt hierzu eine Variante, in der das Werkstück (8) aus der ursprünglich gebogenen Form, die ggf. durch den Stapel (9) verursacht ist, in eine Streckstellung gebracht wird. Hierzu wird durch Rückstellung der Stelleinrichtungen (24) das Gestell (13) wieder in Strecklage gebracht. Durch die mehrachsige Lagerung können die Greifer (14) dieser Bewegung folgen, wobei insbesondere auch eine Bewegung entlang des Werkstücks (8) durch die Schiebeachse (41) möglich ist. Bei diesem Streckvorgang bleiben die Greifer (14) mit dem Werkstück (8) verbunden.

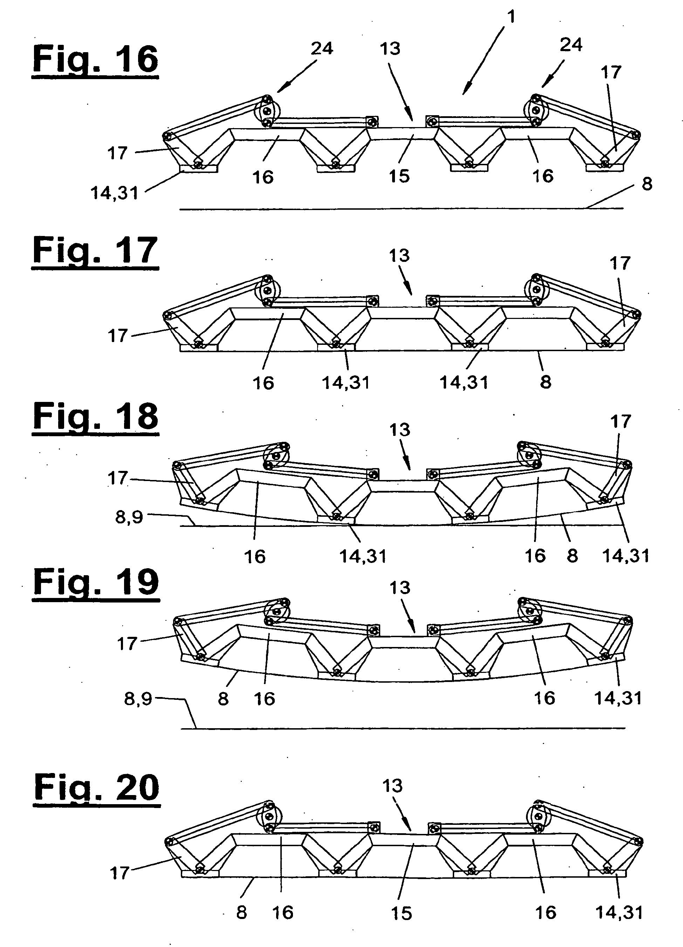

Figur 16 bis 20 zeigen eine andere Funktionsvariante, bei der ein ebenes Werkstück (8) vom Greifwerkzeug (1) mit dem gestreckten Gestell (13) gemäß Figur 16 und 17 gegriffen wird. Um das eventuell am Untergrund haftende Werkstück (8) lösen zu können, wird es vom Untergrund, z.B. einem Stapel (9), abgeschält. Zu diesem Zweck wird das Gestell (13) an beiden Enden angehoben und in eine Bogenform gebracht. Das Werkstück (8) löst sich dabei randseitig vom Untergrund und wird bogenförmig verformt. Gemäß Figur 18 und 19 kann das aufgenommene Werkstück (8) anschließend vom Untergrund gelöst und ggf. gemäß Figur 20 danach wieder in Strecklage gebracht werden.

Figur 22 verdeutlicht eine beispielhafte Ausgestaltung einer mitgeführten Messeinrichtung (48). Hierbei sind am Gestell (13) ein oder mehrere Abstandsmesser (49) angeordnet, die sich z.B. mittig am Zentralteil (15) und an den endseitigen Greifern (14) befinden können und die den Abstand des in geeigneter Lage und Ausrichtung über dem Werkstück (8) gehaltenen Gestells (13) gegenüber dem Werkstück (8) messen. Am Greifwerkzeug (1) können ferner ein oder mehrere weitere Messgeräte, z.B. ein Feuchtemesser (52) angeordnet sein. Die Abstands- und Feuchtemesser (49,52) können als geeignete berührungslose Sensoren ausgebildet sein. Darüber hinaus können weitere Messelemente zur Ermittlung von Werkstückeigenschaften vorhanden sein.

Figur 23 zeigt eine Variante einer stationären Messeinrichtung (48), bei der z.B. mehrere Abstandsmesser (49) an einem stationären Gestell (51) mit Abstand über einem Werkstück (8) angeordnet sind, welches sich ggf. auf einem Stapel (9) befindet. Die Abstandsmesser (49) messen auch hier an mehreren geeigneten Stellen den Abstand gegenüber einem evtl. nicht linear geformten Werkstück (8). Die Bezugsziffer (50) gibt den Messbereich der Messeinrichtung (48) an, über die auch die Höhenlage des obersten Werkstücks (8) im Stapel (9) ermittelt werden kann. Die Messkegel der Abstandsmesser (49) können einander ggf. überlappen.

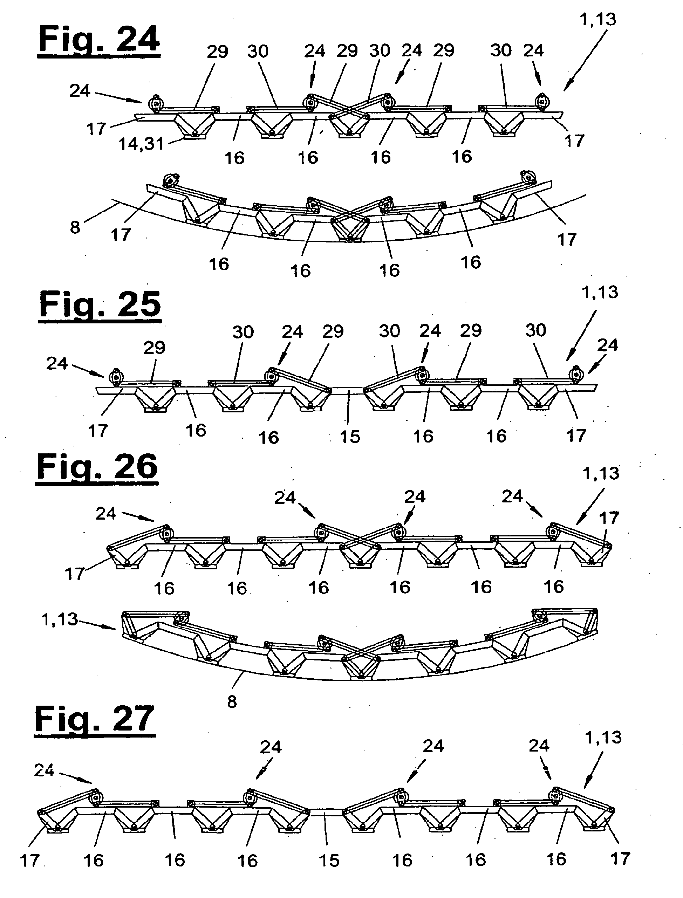

Figur 24 bis 27 zeigen Varianten der Gestellausbildung. In Figur 24 hat das Gestell (13) eine gerade Zahl von Gestellgliedern (15,16,17), z.B. sechs. In diesem Fall sind an den in der Mitte benachbarten Zwischengliedern (16) Stelleinrichtungen (24) angeordnet, wobei die Kurbelarme (29,30) einander in der Mitte kreuzen können. Auch an den Endgliedern (17) können Stelleinrichtungen (24) mit ggf. nur einem Kurbelarm (29,30) montiert sein. Durch die größere Gestelllänge und die entsprechend vergrößerte Zahl von Greifern (14) können größere Werkstücke (8) gegriffen werden. Außerdem ist eine stärkere Biegung des Gestells (13) möglich.

In der Variante von Figur 25 sind sieben Gestellglieder (15,16,17) mit vier Stelleinrichtungen (24) vorhanden, wobei am Zentralglied (15) zwei Kurbelarme (29,30) beidseits angreifen. Diese Variante entspricht in der Kinematik der eingangs beschriebenen Ausführungsform von Figur 1 bis 22 und ist durch zusätzliche Zwischenglieder (16) und Stelleinrichtungen (24) erweitert.

Die Variante von Figur 26 zeigt eine weitere Vergrößerung des Gestells (13) von Figur 24 durch zusätzlichen Einbau von zwei weiteren Zwischengliedern (16).

Die Variante von Figur 27 geht auf die Ausführungsform von Figur 25 zurück, die ebenfalls durch zwei zusätzliche Zwischenglieder (16) erweitert ist. Die äußeren Stelleinrichtungen (24) sind hierbei zweiarmig ausgebildet.

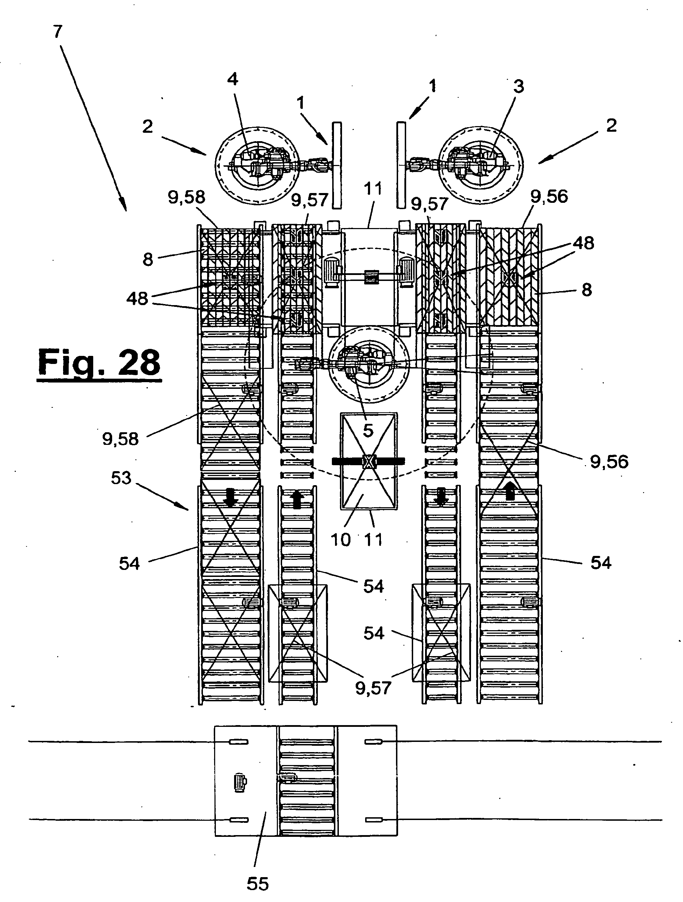

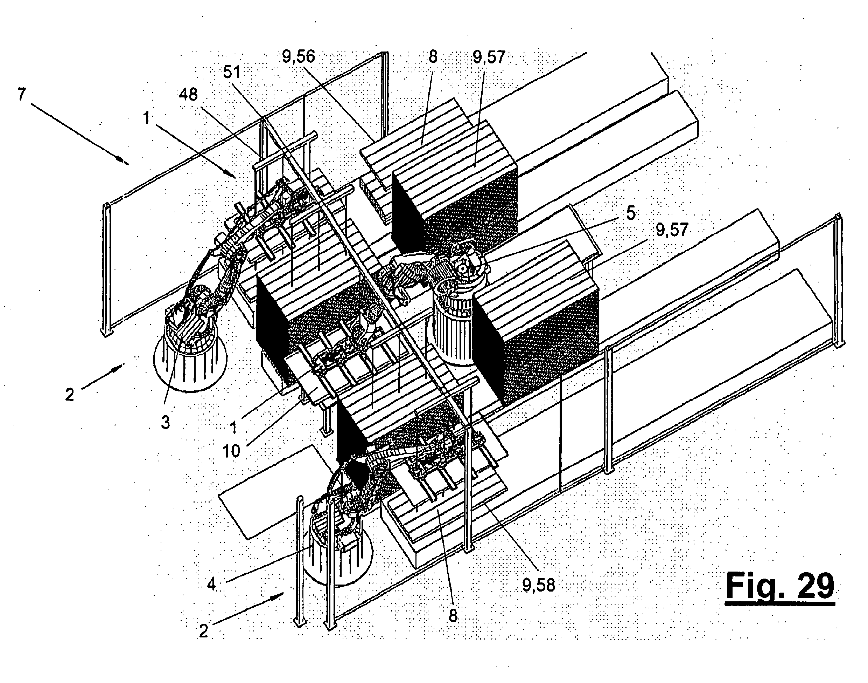

Figur 1 zeigt in Verbindung mit Figur 28 und 29 den Einsatz einer Handhabungseinrichtung (2) als Stapeleinrichtung. Der Manipulator (3,4,5) ist in diesem Ausführungsbeispiel mehrachsig ausgebildet und z.B. als sechsachsiger Gelenkarmroboter ausgebildet. Dieser besitzt drei rotatorische Armachsen und eine Roboterhand (6), die ebenfalls drei rotatorische orthogonale Handachsen besitzt. Mit dem Greifwerkzeug (1) werden Werkstücke (8) von einem Stapel (9) gegriffen. Der Stapel (9) kann verschiedene Elemente beinhalten und ein sog. Mischstapel (57) sein. Er besteht im gezeigten Ausführungsbeispiel aus den Werkstücken (8) und jeweils dazwischen liegenden Einlagen (10). Beide (8,10) können mit demselben Greifwerkzeug (1) gegriffen und gehandhabt werden.

Die Handhabungsstation (7) von Figur 28 und 29 ist als Umstapelstation ausgebildet und weist drei Handhabungseinrichtungen (2) mit Manipulatoren (3,4,5) und Greifwerkzeugen (1) auf. Die Werkstücke (8) sind hier im wesentlichen plattenförmig ausgebildet und bestehen aus Brettern oder Paneelen aus Holz. Die Handhabungsstation (7) weist außerdem eine Fördereinrichtung (53) auf, die hier vier parallele Förderbahnen (54) für unterschiedliche Stapel (9,56,57,58) und außerdem einen am Bahnende verlaufenden Querförderer (55), z.B. einen Verschiebewagen, aufweisen kann. Die Stapel (9,56,57,58) sind mit geeigneten Träger, z.B. Paletten, auf den z.B. als Rollenförderer ausgebildeten Förderbahnen (54) beweglich. Im gezeigten Ausführungsbeispiel geht es um die Trocknung feuchter Holzteile. Um diese allseitig belüften zu können, werden zwischen die Holzteile der Werkstücke (8) Einlagen (10) in Form von Trocknungsblechen eingebracht, die ein Durchströmen der Trockenluft ermöglichen. Hierzu werden die auf einem Vorlagestapel (56) zugeführten Holzteile (8) am Bahnende vom Manipulator (3) mit seinem Greifwerkzeug (1) aufgenommen, wobei über die Flexibilität des Greifwerkzeugs (1) ein Verzug bzw. eine Fehllage der Holzteile im Vorlagestapel (56) berücksichtigt und kompensiert werden kann. Die Holzteile (8) werden dann auf einem Mischstapel (57) unter Zwischenlage von Trockenblechen (10) aufgeschichtet. Die Trockenbleche (10) werden vom Manipulator (5) zugeführt. Der Mischstapel (57) kann anschließend über die Fördereinrichtung (53) der Trockenanlage zugeführt werden. Nach der Trocknung wird der Mischstapel (57) wieder der Handhabungsstation (7) auf der anderen Förderbahn (54) zugeführt und von den Manipulatoren (4,5) entstapelt. Die getrockneten Holzteile (8) werden zu einem Ablagestapel (58) aufgeschichtet. Die frei werdenden Trockenbleche (10) können direkt dem neuen Mischstapel (57) zugeführt oder ggf. an ein oder mehreren Ablagen (11) zwischengepuffert werden.

Mit dem Greifwerkzeug (1) können vom Stapel (9) mehrere Holzteile (8) gleichzeitig gegriffen werden. Insbesondere kann eine gesamte Holzlage gefasst und gehandhabt werden. Durch die Messeinrichtung (48), die hier z.B. an einem brückenartigen stationären Gestell (51) angeordnet ist, ermöglicht eine Lage- und Formerfassung der Holzteile (8). Das Greifwerkzeug (1) erstreckt sich über die Stapelgrenzen hinaus und ermöglicht eine sichere Erfassung der Holzteile auch bei Schiefstellungen oder anderen Stapelverformungen. Die hierbei auftretenden Fehllagen können über die Messeinrichtung (48) erkannt und bei der Zuführung der aufgenommenen Holzteile (8) zum Zwischenstapel (57) berücksichtigt sowie durch eine entsprechend geänderte Führungsbewegung des Manipulators (3) für eine lagerichtige Abgabe kompensiert werden.

Auch die Trockenbleche (10) können Verformungen aufweisen, die sich in der Stapelform der Mischstapel (57) äußern. Derartige Fehler können ebenfalls durch die Messeinrichtung (48) erfasst und beim Umstapeln mit dem Manipulator (4) zur Bildung eines exakten Ablagestapels (58) berücksichtigt und kompensiert werden.

Ferner kann das Greifwerkzeug (1) die Aufnahme- und Ablegereihenfolge der Werkstücke (8) beliebig ändern. So kann sie z.B. zwei oder mehr übereinander liegende Lagen von Werkstücken (8) nacheinander entnehmen, z.B. mit der rechten, mittleren und linken Seite des Greifers (14). Sie kann die Werkstücke (8) dann einzeln oder gemeinsam ablegen. Beim Umstapeln können schmale Stapel auf breite Stapel umgeschichtet werden und auch umgekehrt.

Abwandlungen der gezeigten und beschriebenen Ausführungsformen sind in verschiedener Weise möglich. Dies betrifft die konstruktive Ausbildung des Greifwerkzeugs (1), der Handhabungseinrichtung (2) und der Handhabungsstation (7) sowie die Funktion und Kinematik des Greifwerkzeugs (1).

Insbesondere können dessen Bestandteile konstruktiv anders ausgebildet und miteinander verbunden sein, wie nachstehend angegeben.

Der Greifer (14) kann eine oder mehrere rotatorische Achsen und mindestens eine translatorische Achse aufweisen.

Der Greifer (14) kann schwenkbar an zumindest einem Gestellglied (15,16,17) gelagert (36) sein, wobei die Lagerachsen (23,37) der Schwenklager (22,36) der Gestellglieder (15,16,17) und des Greifers (14) nicht miteinander fluchten.

Das Greifelement (31) des Greifers (14) muss nicht steuerbar sein.

Der Greifer (14) weist eine Gelenkeinheit (33) auf, die zwei Schwenklager (36,38) mit sich kreuzenden Lagerachsen (37,39) und ein Schiebelager (40) besitzt.

Die Gelenkeinheit (33) weist ein rahmenartiges Gehäuse (34) mit den Schwenklagern (36,38) und einen Anschlussflansch (43) für das Greifelement (31) auf, welcher auf der einen Lagerachse (39) verschieblich geführt ist.

Das Rückstellelement (44,45,46) des Greifers (14) ist in beliebiger Weise elastisch und z.B. als Gasfeder (47) ausgebildet.

Der Greifer (14) ist durch Rückstellelemente (44) mit den benachbarten Gestellgliedern (15,16,17) verbunden.

Die Rückstellelemente (44) richten den Greifer (14) auf die Winkelhalbierende zwischen den benachbarten Gestellgliedern (15,16,17) aus.

Das Greifelement (31) ist durch Rückstellelemente (45) mit dem Gehäuse (34) der Gelenkeinheit (33) verbunden.

Der Anschlussflansch (43) ist durch Rückstellelemente (46) mit dem Gehäuse (34) der Gelenkeinheit (33) verbunden.

Der Kurbeltrieb (27) der Stelleinrichtung (24) weist eine zentral gelagerte Kurbelscheibe (28) und daran diametral gegenüberliegend angeschlossene Kurbelarme (29,30) auf.

### BEZUGSZEICHENLISTE

- 1: flexibles Greifwerkzeug
- 2: Handhabungseinrichtung
- 3: Manipulator, Roboter
- 4: Manipulator, Roboter
- 5: Manipulator, Roboter
- 6: Hand, Roboterhand
- 7: Handhabungsstation
- 8: Werkstück, Brett
- 9: Stapel
- 10: Einlage
- 11: Ablage
- 12: Anschluss
- 13: Gestell mehrgliedrig
- 14: Greifer
- 15: Gestellglied, Zentralglied
- 16: Gestellglied, Zwischenglied
- 17: Gestellglied, Endglied
- 18: Mittelteil
- 19: Seitenteil, Lagerarm
- 20: Stegteil
- 21: Verbindungsstelle
- 22: Lager, Schwenklager
- 23: Lagerachse
- 24: Stelleinrichtung
- 25: Stellantrieb
- 26: Stellelement
- 27: Kurbeltrieb
- 28: Kurbelscheibe
- 29: Kurbelarm
- 30: Kurbelarm
- 31: Greifelement
- 32: Flächengreifer
- 33: Gelenkeinheit
- 34: Gehäuse
- 35: Bügel
- 36: Lager, Schwenklager
- 37: Lagerachse längs, Bewegungsachse
- 38: Lager, Schwenklager
- 39: Lagerachse quer, Bewegungsachse
- 40: Lager, Schiebelager
- 41: Lagerachse, Schiebeachse, Bewegungsachse
- 42: Lagerblock
- 43: Anschlussflansch
- 44: Rückstellelement für Greifer
- 45: Rückstellelement für Greifelement
- 46: Rückstellelement für Lagerblock
- 47: Gasfeder
- 48: Messeinrichtung
- 49: Abstandsmesser, Sensor
- 50: Messbereich
- 51: stationäres Gestell
- 52: Feuchtemesser, Sensor
- 53: Fördereinrichtung
- 54: Förderbahn
- 55: Querförderer, Verschiebewagen
- 56: Vorlagestapel
- 57: Mischstapel
- 58: Ablagestapel

## Patentansprüche

1. Greifwerkzeug für ein oder mehrere Werkstücke (8) mit einem Gestell (13), einem Anschluss (12) für einen Manipulator (3,4,5) und mehreren Greifern (14), wobei das Gestell (13) mehr als zwei gelenkig miteinander verbundene Gestellglieder (15,16,17) und mindestens eine steuerbare Stelleinrichtung (24) für deren gegenseitige Verstellung aufweist.

2. Greifwerkzeug nach Anspruch 1, **dadurch gekennzeichnet, dass** die Gestellglieder (15,16,17) in mindestens einer Reihe hintereinander angeordnet und an den Verbindungsstellen (21) durch Lager (22), insbesondere Schwenklager, verbunden sind.

3. Greifwerkzeug nach Anspruch 1 oder 2, **dadurch gekennzeichnet, dass** an den Gestellgliedern (15,16,17) im Bereich der Verbindungsstellen (21) ein oder mehrere Greifer (14) angeordnet sind.

4. Greifwerkzeug nach Anspruch 1, 2 oder 3, **dadurch gekennzeichnet, dass** der Greifer (14) eine oder mehrere Bewegungsachsen aufweist.

5. Greifwerkzeug nach einem der vorhergehenden Ansprüche, **dadurch gekennzeichnet, dass** der Greifer (14) schwenkbar an zumindest einem Gestellglied (15,16,17) gelagert (36) ist, wobei die Lagerachsen (23,37) der Schwenklager (22,36) der Gestellglieder (15,16,17) und des Greifers (14) fluchten.

6. Greifwerkzeug nach einem der vorhergehenden Ansprüche, **dadurch gekennzeichnet, dass** der Greifer (14) mindestens ein steuerbares Greifelement (31) aufweist.

7. Greifwerkzeug nach einem der vorhergehenden Ansprüche, **dadurch gekennzeichnet, dass** das Greifelement (31) als Flächengreifer (32) ausgebildet ist.

8. Greifwerkzeug nach einem der vorhergehenden Ansprüche, **dadurch gekennzeichnet, dass** das Greifelement (31) mehrachsig schwenkbar, insbesondere kardanisch, und/oder verschieblich gelagert ist.

9. Greifwerkzeug nach einem der vorhergehenden Ansprüche, **dadurch gekennzeichnet, dass** der Greifer (14) mindestens ein Rückstellelement (44,45,46) im Bereich mindestens einer Lagerachse (37,39,41) aufweist.

10. Greifwerkzeug nach einem der vorhergehenden Ansprüche, **dadurch gekennzeichnet, dass** die Stelleinrichtung (24) einen Stellantrieb (25) und ein oder mehrere Stellelemente (26) aufweist.

11. Greifwerkzeug nach einem der vorhergehenden Ansprüche, **dadurch gekennzeichnet, dass** die Stelleinrichtung (24) auf einem Gestellglied (16) angeordnet und über die Stellelemente (26) mit den benachbarten Gestellgliedern (15,16,17) verbunden ist.

12. Greifwerkzeug nach einem der vorhergehenden Ansprüche, **dadurch gekennzeichnet, dass** die Stelleinrichtung (24) einen Kurbeltrieb (27) aufweist.

13. Handhabungseinrichtung für ein oder mehrere Werkstücke (8) mit einem ein- oder mehrachsig beweglichen Manipulator (3,4,5) und einem daran angeordneten Greifwerkzeug (1) mit einem Gestell (13) und mehreren Greifern (14), **dadurch gekennzeichnet, dass** das Greifwerkzeug (1) nach mindestens einem der Ansprüche 1 bis 12 ausgebildet ist.

14. Handhabungseinrichtung nach Anspruch 13, **dadurch gekennzeichnet, dass** die Handhabungseinrichtung (2) als Stapeleinrichtung ausgebildet ist.

15. Verfahren zum Handhaben von ein oder mehreren Werkstücken (8) mit mindestens einer Handhabungseinrichtung (2), die einen ein- oder mehrachsig beweglichen Manipulator (3,4,5) und ein daran angeordnetes Greifwerkzeug (1) mit einem Gestell (13) und mehreren Greifern (14) aufweist, wobei durch eine Formänderung des Gestells (13), welches mehr als zwei gelenkig miteinander verbundene Gestellglieder (15,16,17) und eine Stelleinrichtung (24) für deren gegenseitige Verstellung aufweist, das Greifwerkzeug (1) an eine nicht lineare Form des Werkstücks (8) angepasst wird.

16. Verfahren nach Anspruch 15, **dadurch gekennzeichnet, dass** durch eine Formänderung des Gestells (13) die Formgebung des gegriffenen Werkstücks (8) geändert wird und/oder das gegriffene Werkstück (8) vereinzelt oder abgeschält wird.

## Claims

1. Gripping tool for one or more workpieces (8), having a frame (13), having a connection (12) for a manipulator (3, 4, 5) and having a plurality of grippers (14), wherein the frame (13) has more than two frame members (15, 16, 17) connected together in an articulated manner and at least one controllable actuating device (24) for the mutual adjustment thereof.

2. Gripping tool according to Claim 1, **characterized in that** the frame members (15, 16, 17) are arranged in succession in at least one row and are connected at the connecting points (21) by bearings (22), in particular pivot bearings.

3. Gripping tool according to Claim 1 or 2, **characterized in that** one or more grippers (14) are arranged on the frame members (15, 16, 17) in the region of the connecting points (21).

4. Gripping tool according to Claim 1, 2 or 3, **characterized in that** the gripper (14) has one or more movement axes.

5. Gripping tool according to one of the preceding claims, **characterized in that** the gripper (14) is mounted (36) pivotably on at least one frame member (15, 16, 17), wherein the bearing axes (23, 37) of the pivot bearings (22, 36) of the frame members (15, 16, 17) and of the gripper (14) are aligned.

6. Gripping tool according to one of the preceding claims, **characterized in that** the gripper (14) has at least one controllable gripping element (31).

7. Gripping tool according to one of the preceding claims, **characterized in that** the gripping element (31) is in the form of an area gripper (32).

8. Gripping tool according to one of the preceding claims, **characterized in that** the gripping element (31) is mounted pivotably about a plurality of axes, in particular cardanically, and/or displaceably.

9. Gripping tool according to one of the preceding claims, **characterized in that** the gripper (14) has at least one restoring element (44, 45, 46) in the region of at least one bearing axis (37, 39, 41).

10. Gripping tool according to one of the preceding claims, **characterized in that** the actuating device (24) has an actuating drive (25) and one or more actuating elements (26).

11. Gripping tool according to one of the preceding claims, **characterized in that** the actuating device (24) is arranged on a frame member (16) and is connected via the actuating elements (26) to the adjacent frame members (15, 16, 17).

12. Gripping tool according to one of the preceding claims, **characterized in that** the actuating device (24) has a crank drive (27).

13. Handling device for one or more workpieces (8), having a manipulator (3, 4, 5) which can be moved about one or more axes and having a gripping tool (1) which is arranged thereon and has a frame (13) and a plurality of grippers (14), **characterized in that** the gripping tool (1) is in the form according to one of Claims 1 to 12.

14. Handling device according to Claim 13, **characterized in that** the handling device (2) is in the form of a stacking device.

15. Method for handling one or more workpieces (8) with at least one handling device (2) having a manipulator (3, 4, 5) which can be moved about one or more axes and having a gripping tool (1) which is arranged thereon and has a frame (13) and a plurality of grippers (14), wherein the gripping tool (1) can be matched to a non-linear form of the workpiece (8) by changing the form of the frame (13), which has more than two frame members (15, 16, 17) connected together in an articulated manner and an actuating device (24) for the mutual adjustment thereof.

16. Method according to Claim 15, **characterized in that** the shape of the gripped workpiece (8) can be changed and/or the gripped workpiece (8) can be separated or peeled off by changing the form of the frame (13).

## Revendications

1. Outil de saisie pour une ou plusieurs pièces (8) avec un châssis (13), un raccord (12) pour un manipulateur (3, 4, 5) et plusieurs pinces (14), dans lequel le châssis (13) comporte plus de deux éléments de châssis (15, 16, 17) reliés les uns aux autres de façon articulée et au moins un dispositif de réglage (24) apte à être commandé pour le réglage mutuel de ceux-ci.

2. Outil de saisie selon la revendication 1, **caractérisé en ce que** les éléments de châssis (15, 16, 17) sont disposés l'un derrière l'autre en au moins une rangée et sont reliés aux points de liaison (21) par des paliers (22), en particulier des paliers pivotants.

3. Outil de saisie selon la revendication 1 ou 2, **caractérisé en ce qu'**une ou plusieurs pinces (14) sont disposées sur les éléments de châssis (15, 16, 17), dans la région des points de liaison (21).

4. Outil de saisie selon la revendication 1, 2, ou 3, **caractérisé en ce que** la pince (14) présente un ou plusieurs axes de mouvement.

5. Outil de saisie selon l'une quelconque des revendications précédentes, **caractérisé en ce que** la pince (14) est montée de façon pivotante (36) sur au moins un élément de châssis (15, 16, 17), dans lequel les axes de palier (23, 37) des paliers pivotants (22, 36) des éléments de châssis (15, 16, 17) et de la pince (14) sont en alignement.

6. Outil de saisie selon l'une quelconque des revendications précédentes, **caractérisé en ce que** la pince (14) comporte au moins un élément de saisie (31) apte à être commandé.

7. Outil de saisie selon l'une quelconque des revendications précédentes, **caractérisé en ce que** l'élément de saisie (31) se présente sous la forme d'une pince plate (32).

8. Outil de saisie selon l'une quelconque des revendications précédentes, **caractérisé en ce que** l'élément de saisie (31) est monté de façon pivotante selon plusieurs axes, en particulier à Cardan, et/ou de façon coulissante.

9. Outil de saisie selon l'une quelconque des revendications précédentes, **caractérisé en ce que** la pince (14) comporte au moins un élément de rappel (44, 45, 46) dans la région d'au moins un axe de palier (37, 39, 41).

10. Outil de saisie selon l'une quelconque des revendications précédentes, **caractérisé en ce que** le dispositif de réglage (24) comprend une commande de réglage (25) et un ou plusieurs éléments de réglage (26).

11. Outil de saisie selon l'une quelconque des revendications précédentes, **caractérisé en ce que** le dispositif de réglage (24) est monté sur un élément de châssis (16) et est relié aux éléments de châssis voisins (15, 16, 17) au moyen des éléments de réglage (26).

12. Outil de saisie selon l'une quelconque des revendications précédentes, **caractérisé en ce que** le dispositif de réglage (24) comprend une commande à manivelle (27).

13. Dispositif de manipulation pour une ou plusieurs pièces (8) avec un manipulateur (3, 4, 5) mobile selon un ou plusieurs axes et un outil de saisie (1) avec un châssis (13) et plusieurs pinces (14), disposé sur celui-ci, **caractérisé en ce que** l'outil de saisie (1) est réalisé selon au moins une des revendications 1 à 12.

14. Dispositif de manipulation selon la revendication 13, **caractérisé en ce que** le dispositif de manipulation (2) se présente sous la forme d'un dispositif d'empilement.

15. Procédé pour manipuler une ou plusieurs pièces (8) avec au moins un dispositif de manipulation (2), qui comprend un manipulateur (3, 4, 5) mobile selon un ou plusieurs axes et un outil de saisie (1) avec un châssis (13) et plusieurs pinces (14), disposé sur celui-ci, dans lequel on adapte l'outil de saisie (1) à une forme non linéaire de la pièce (8) par un changement de forme du châssis (13), qui comporte plus de deux éléments de châssis (15, 16, 17) reliés les uns aux autres de façon articulée ainsi qu'un dispositif de réglage (24) pour le réglage mutuel de ceux-ci.

16. Procédé selon la revendication 15, **caractérisé en ce que** l'on change la forme de la pièce saisie (8) et/ou on isole ou on décolle la pièce saisie (8) par un changement de forme du châssis (13).
